# EUROPEAN PATENT APPLICATION

(11) **EP 4 523 547 A1**
(43) Date of publication of application: **19.03.2025**
(21) Application number: 24199358.3
(22) Date of filing: 10.09.2024
(51) Int. Cl.: A23L 2/54, A23L 2/56, B01F 23/236

(54) **SPARKLING WATER AND THE PRODUCTION METHOD THEREOF**

(30) Priority: 18.09.2023 CZ 20230357
(71) Applicant: Tucek, Martin, 69144 Lednice (CZ)
(72) Inventor: Tucek, Martin, 69144 Lednice (CZ)
(74) Representative: Dadej, Leopold

(57) **Abstract**

Sparkling water carbonated with carbon dioxide and the production method thereof, where carbon dioxide formed during the fermentation of fruits or vegetables and/or components thereof is used for carbonation of water and where the preparation of this carbonated water follows several basic steps, where first the water intended for carbonation is pre-treated by conventional treatment, i.e. it is stripped of impurities, filtered, chlorinated, and its pH is adjusted to neutral, or other necessary treatments, and subsequently it is carbonated with carbon dioxide from an external pressure vessel, wherein the external pressure vessel holds the carbon dioxide formed during the fermentation of the fruits or vegetables and/or components thereof, and this carbon dioxide is pumped under pressure directly into the water, i.e. below its surface, and absorbed by the water, thus producing sparkling water.

## Description

### Technical Field

The invention relates to the field of carbonated non-alcoholic beverages, in particular sparkling water carbonated with carbon dioxide, and to the production thereof.

### Background of the Invention

Carbonated non-alcoholic beverages are very popular beverages containing water carbonated with carbon dioxide, possibly containing sugar and flavoring components. The water must first be stripped of impurities, filtered, chlorinated, and then its pH adjusted to neutral. Water treated this way is then used as a feedstock for the beverage manufacturing plant, where it is first degassed under negative pressure and in the presence of CO2 in order to remove oxygen from it. This water can then be mixed with various sweeteners or sweet syrups, flavorings and dyes to create the desired final product. These additional components can be added in several steps, usually in vessels with a protective atmosphere of CO2. Controlled heating and cooling, heating for pasteurization of some components, cooling for controlled and easy dosing of CO2 gas are also necessary. The beverage is then usually saturated with CO2 in the last step of production, just before bottling or canning.

Carbon dioxide prepared by reacting carbonates, especially calcium carbonate, with strong acids, such as hydrochloric acid, has been commonly used to carbonate water. Industrially, carbon dioxide is produced by the thermal decomposition (annealing) of limestone (calcium carbonate). The resulting carbon dioxide is then used to carbonate water.

Also known is Japanese patent JP2013099258 describing a method of carbonating sake with carbon dioxide created by fermentation of rice. Sake is fermenting in vessel A and this vessel A is directly connected by a pipe provided with a pressure valve to a second vessel B, in which the finished sake is located, which is not saturated with carbon dioxide and is therefore "non-sparkling". As soon as the pressure of carbon dioxide rises in the vessel A, it enters via a pipe the vessel B directly, where the sake is located, above the surface level of the sake, which absorbs the incoming carbon dioxide by its surface. The result is a sparkling sake without the need to filter and decant the newly formed sparkling sake, as it does not ferment itself. It is therefore an improvement in the process of obtaining sparkling sake, a facilitation of the production process, and as such this patent is primarily concerned with the carbonation process and not with the resulting product.

### Summary of the Technical Solution

The object of the present invention is a sparkling water carbonated with carbon dioxide and a production method thereof, the essence of which lies in the fact that carbon dioxide formed during the fermentation of fruits or vegetables and/or components thereof, preferably by fermentation of grape wine, is used for carbonation of water according to the present invention, and that the preparation of carbonated water follows several basic steps, where first the water intended for carbonation is pre-treated by conventional treatment, i.e. it is stripped of impurities, filtered, chlorinated, and its pH is adjusted to neutral, or other necessary treatments, and subsequently it is carbonated with carbon dioxide from an external pressure vessel, wherein the external pressure vessel holds the carbon dioxide formed during the fermentation of the fruits or vegetables and/or components thereof, and this carbon dioxide is pumped under pressure directly into the water, i.e. below its surface, and it is absorbed by the water, thus producing sparkling water. Depending on the amount of carbon dioxide pumped, it is possible to prepare water that is mildly sparkling to sparkling. The resulting product has unique sensory characteristics, depending on the type of fruits or vegetables used for the fermentation.

The sparkling water can be enriched with other fruit or vegetable flavors in another one of the preferred embodiments.

In contrast to the patent JP2013099258, where the carbon dioxide formed by the fermentation of sake and used without the intermediate step of storing this carbon dioxide in an external vessel is introduced above the surface of the sake, i.e. into the alcoholic beverage and absorbed by this alcoholic beverage through its surface, the sparkling water according to the present invention is carbonated with carbon dioxide received into an external pressure vessel and only then is this carbon dioxide pumped under pressure directly into the water and absorbed by the water. Thus, it is not a gas which is formed at a specific moment from a fermenting liquid and at the same moment is transferred by a pipe to another liquid, as is the case with the Japanese patent JP2013099258.

An advantage of the present technical solution is the use of carbon dioxide formed by the fermentation of fruits or vegetables, which under normal circumstances would be a waste product, and the formation of sparkling water with unique sensory properties, wherein medical properties are also not excluded. Another advantage is, among other things, the fact that the formed carbon dioxide does not have to be used in the one-step production process - here direct introduction - and can be used at any time afterwards.

### Exemplary Embodiments of the Technical Solution

### Example 1

The sparkling water is carbonated to a strongly sparkling water with carbon dioxide from an external pressure vessel containing the carbon dioxide formed and captured during the fermentation of the grape wine. The carbon dioxide is introduced under pressure below the surface of the water.

### Example 2

The sparkling water is carbonated to a medium sparkling water with carbon dioxide from an external pressure vessel containing the carbon dioxide formed and captured during the fermentation of strawberries. The sparkling water is further enriched with peach and mango flavors. The carbon dioxide is introduced under pressure below the surface of the water.

### Example 3

The sparkling water is carbonated to a strongly sparkling water with carbon dioxide from an external pressure vessel containing the carbon dioxide formed and captured during the fermentation of celery. The carbon dioxide is introduced under pressure below the surface of the water.

The above exemplary embodiments are illustrative; essentially any fruit or vegetable can be used for the fermentation.

## Claims

1. Sparkling water carbonated with carbon dioxide, **characterized in that** the water is carbonated with carbon dioxide formed during the fermentation of fruits or vegetables and components thereof.

2. The sparkling water carbonated with carbon dioxide according to claim 1, **characterized in that** the water has sensory properties depending on the type of fruits or vegetables used for the fermentation.

3. The sparkling water carbonated with carbon dioxide according to claim 1, **characterized in that** it is enriched with fruit flavors.

4. The sparkling water carbonated with carbon dioxide according to claim 1, **characterized in that** it is enriched with vegetable flavors.

5. A method for production of water carbonated with carbon dioxide, **characterized in that** the water to be carbonated, prepared by purification, pH adjustment, etc., is subsequently carbonated with carbon dioxide, formed during fermentation of fruits or vegetables and/or components thereof, received in an external pressure vessel and stored in this pressure vessel, where this carbon dioxide is subsequently pumped under pressure directly into the water and absorbed by the water, thus forming sparkling water.
